# EUROPEAN PATENT APPLICATION

(11) **EP 3 243 684 A1**
(43) Date of publication of application: **15.11.2017**
(21) Application number: 16168971.6
(22) Date of filing: 10.05.2016
(51) Int. Cl.: B60K 28/06, B60K 35/00, B60W 40/08

(54) **VEHICLE OCCUPANT MONITORING**

(71) Applicant: Autoliv Development AB, 447 83 Vårgårda (SE)
(72) Inventor: BRANDENBURG, Uwe, 886 77 MARKDORF (DE); EDER, Oliver, 754 46 Pinache (DE); GRÖSCH, Lothar, 710 83 HERRENBERG (DE)
(74) Representative: Kransell & Wennborg KB

(57) **Abstract**

There is provided mechanisms for monitoring a vehicle occupant (300). An electronic control system (200) comprises a light emitter (210). The light emitter is arranged to emit light comprising a Fraunhofer line wavelength. The light is emitted inside a wavelength interval having a width of less than 50 nm, preferably less than 25 nm, even preferably less than 10 nm. The electronic control system comprises a light sensor (220). The light sensor is arranged to receive light having been emitted by the light emitter after having been reflected by the vehicle occupant. The light sensor is configured to sense the light only within the wavelength interval.

## Description

### TECHNICAL FIELD

Embodiments presented herein relate to monitoring a vehicle occupant, and particularly to an electronic control system and a method for monitoring a vehicle occupant.

### BACKGROUND

Driver fatigue has been identified as a safety issue. Driver fatigue manifests itself in drowsiness, a state of diminished mental alertness, in turn impairing an individual's ability to operate a vehicle safely and, thereby, increasing the risk of human error that could lead to fatalities and injuries.

Drowsiness is the body's reaction to fatigue and drowsiness slows reaction time, decreases awareness, and impairs judgment. Studies as have been done show that drivers tend to underreport drowsiness, either because they are not aware of being drowsy or underestimate the extent to which they are impaired by drowsiness. Incidence of impairing drowsiness is underestimated because it is so difficult to quantify and measure.

Driver's drowsiness can be measured by two classes of phenomena: physical and physiological on the one hand and vehicle state variables on the other hand. Physical and physiological measurements include the measurement of brain wave or Electroencephalogram (EEG). PERCLOS (PERcent eyelid CLOSure) is one of the most widely accepted measures in scientific literature for measurement and detection of drowsiness.

Drowsiness detection systems have been developed which work based on measurement of physical and physiological features, and can provide very good detection accuracy. However, they have some shortcomings. The problem with an EEG is that it requires the use of electrodes to be attached to the scalp and that makes it very impractical to use. Eye closure activity can also provide good detection accuracy, but capturing eye image unobtrusively can be expensive and challenging under certain conditions. Changes in light conditions, correction glasses, angle of face, and other conditions can seriously affect the performance of image processing systems.

Hence, there is still a need for improved mechanisms for monitoring a vehicle occupant.

### SUMMARY

An object of embodiments herein is to provide efficient monitoring of a vehicle occupant.

According to a first aspect there is presented an electronic control system for monitoring a vehicle occupant. The electronic control system comprises a light emitter. The light emitter is arranged to emit light comprising a Fraunhofer line wavelength. The light is emitted inside a wavelength interval having a width of less than 50 nm, preferably less than 25 nm, even preferably less than 10 nm. The electronic control system comprises a light sensor. The light sensor is arranged to receive light having been emitted by the light emitter after having been reflected by the vehicle occupant. The light sensor is configured to sense the light only within the wavelength interval Advantageously this electronic control system provides efficient monitoring of a vehicle occupant.

Advantageously this electronic control system enables oversaturation effects caused by natural sunlight to be avoided, or at least mitigated.

According to a second aspect there is presented a method for monitoring a vehicle occupant. The method comprises emitting, by a light emitter, light comprising a Fraunhofer line wavelength. The light is emitted inside a wavelength interval having a width of less than 50 nm, preferably less than 25 nm, even preferably less than 10 nm. The method comprises receiving, by a light sensor, light having been emitted by the light emitter after having been reflected by the vehicle occupant. The method comprises sensing, by the light sensor, the light only within the wavelength interval.

It is to be noted that any feature of the first and second aspects may be applied to any other aspect, wherever appropriate. Likewise, any advantage of the first aspect may equally apply to the second aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating part of a vehicle interior according to an embodiment;
Fig. 2 is a schematic diagram showing functional units of a electronic control system according to an embodiment; and
Figs. 3 and 4 are flowcharts of methods according to embodiments.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The embodiments disclosed herein relate to mechanisms for monitoring a vehicle occupant. In order to obtain such mechanisms there is provided an electronic control system, and a method performed by the electronic control system.

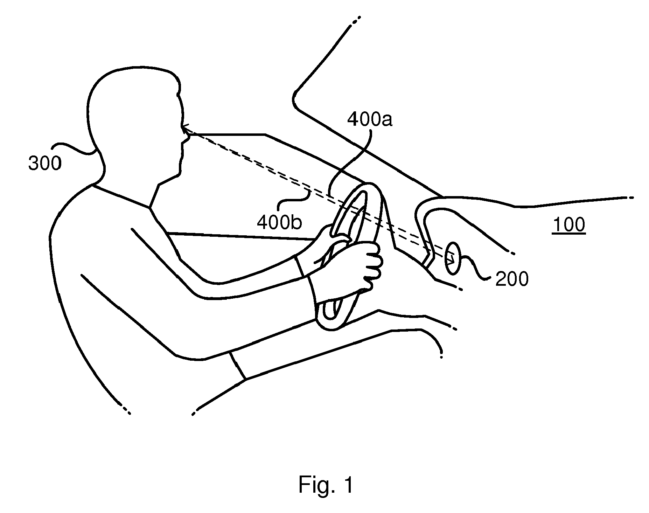

Fig. 1 is a schematic diagram illustrating part of a vehicle interior according to an embodiment. The vehicle interior is part of a vehicle 100. The vehicle 100 is preferably an automotive vehicle. An electronic control system 200 is schematically illustrated as positioned at a dashboard of the vehicle 100. However, the electronic control system 200 can be positioned elsewhere in the vehicle interior. For example the electronic control system 200 can be positioned at the steering wheel, below or above the windshield, in a ceiling of the vehicle 100 or at an A-pillar of the vehicle 100. Depending on the placement of the electronic control system 200 different regions of the vehicle interior (such as only the front seat, only the back seat, or the front seat and the back seat) can be monitored. As will be further disclosed below, the electronic control system 200 at least comprises a light emitter and a light sensor. The light emitter and the light sensor are directed to a vehicle occupant 300. In the illustrative example of Fig. 1 the vehicle occupant 300 is a vehicle driver, but the vehicle occupant 300 could be a vehicle passenger. Particularly, the light emitter is arranged to emit light 400a and the light sensor is arranged to receive light 400b as emitted by the light emitter and after having been reflected by the vehicle occupant 300.

The electronic control system 200, with its light emitter and light sensor directed toward the vehicle driver or any of the other vehicle occupants, can be configured to detect and estimate driver drowsiness, driver gaze direction, occupant position, etc. The estimation can be used for safety applications such as attentiveness warnings, automatic braking and other safety related actions. In order to do so the light sensor needs to receive light 400b as reflected by the vehicle occupant 300.

Sunlight provides a problem for some light sensors. It is especially the varied intensity of light in the faces of the vehicle occupant 300 that cause difficulties for image processing performed as part of the detection and estimation in the electronic control system 200. An even illumination of the face can be achieved by reducing the exposure time and/or the active illumination (from lights/flashes). But the sun creates shadows from sun visors, pillars etc. and/or illuminates the face only from the side, which again causes difficulties for the image processing. Sunlight in most situations represents the strongest light source. Hence, for an optical light sensor there might be side effects due to very high intensive sunlight which can occur as oversaturation in the light sensor caused by the sunlight effect.

In general terms, the embodiments disclosed herein are based on, by means of the light emitter, creating an artificial interior illumination (inside the vehicle interior) which is not affected from the sunlight and not visible for humans, and where the light sensor is still sensitive enough in terms of signal to noise ratio for the electronic control system 200 to use the reflected light 400b for image processing.

In general terms, the embodiments disclosed herein are based on the light emitter emitting light of a very specific wave length within the vehicle interior and receiving the light with a light sensor only sensing that specific light. This would enable the electronic control system 200 to obtain images of the vehicle occupant 300 without experiencing the above problems caused by sunlight.

Particularly, the embodiments disclosed herein are based on the light sensor sensing light in the gaps in the sunlight spectrum known as Fraunhofer lines in order to fade potential saturation condition caused by the sunlight intensity. This requires the light emitter to be arranged to emit such artificial light.

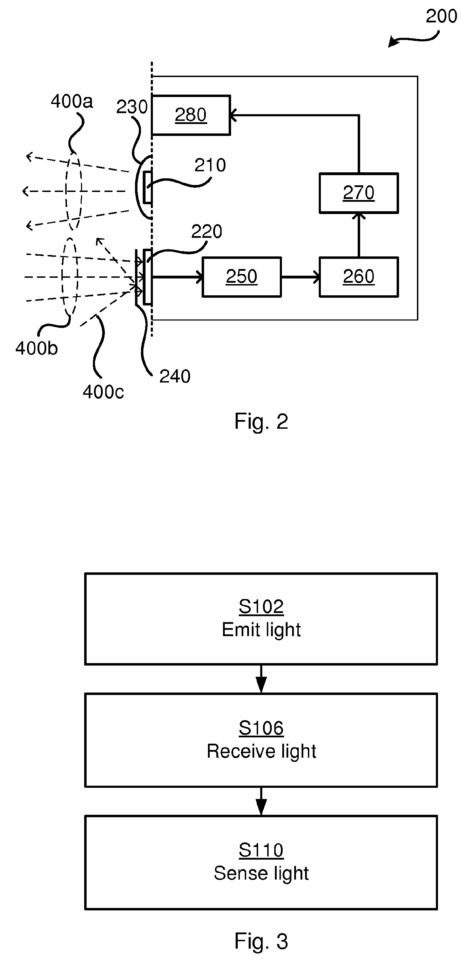

Particular reference is now made to Fig. 2. Fig. 2 is a schematic diagram showing functional units of the electronic control system 200 for monitoring the vehicle occupant 300 according to an embodiment.

The electronic control system 200 comprises a light emitter 210. The light emitter 210 is arranged to emit light 400a. The light 400a comprises a Fraunhofer line wavelength. The light 400a is emitted inside a wavelength interval. The wavelength interval has a width of less than 50 nm, preferably less than 25 nm, even preferably less than 10 nm.

The electronic control system 200 comprises a light sensor 220. The light sensor 220 is arranged to receive light 400b. The received light 400b has been emitted by the light emitter 210 and is by the light sensor 220 received after having been reflected by the vehicle occupant 300. The light sensor 220 is configured to sense light 400b only within the wavelength interval. In this respect, although the light sensor 220 may receive light outside the wavelength interval, it only registers received light 400b (and thus senses the light 400b) within the wavelength interval.

Hence, such an electronic control system 200 can define a driver monitoring system comprising a light emitter 210 and a light sensor 220 and being characterized in that the emitted light 400a is within Fraunhofer line wavelengths and the light sensor 220 is adapted to sense such light 400b.

Embodiments relating to further details of the electronic control system 200 will now be disclosed.

There are different examples of Fraunhofer line wavelengths. Three examples of Fraunhofer line wavelengths are wavelengths around 759 nm (denoted Fraunhofer Line A and caused by the oxygen in the atmosphere), around 823 nm (denoted Fraunhofer Line Z and caused by the oxygen in the atmosphere) and around 899 nm (denoted Fraunhofer Line y and caused by the oxygen in the atmosphere), and around 940 nm. Hence, according to an embodiment the Fraunhofer line wavelength emitted by the light emitter 210 is one of 759 nm, 823 nm, 899 nm, and 940 nm. The light sensor 220 can thus be configured to sense light inside a wavelength interval comprising at least one of 759 nm, 823 nm, 899 nm, and 940 nm. Preferably, the Fraunhofer line wavelength emitted by the light emitter 210 is 899 nm and hence preferably the light sensor 220 is configured to sense light inside a wavelength interval comprising 899 nm.

According to an embodiment the electronic control system 200 further comprises a diffuser 230. The diffuser 230 is arranged to diffuse the emitted light 400a before the light 400a is reflected by the vehicle occupant 300. Whether to use a diffuser 230 or not can depend on the light spreading properties of the light emitter 210.

According to an embodiment the electronic control system 200 further comprises a bandpass filter 240. The bandpass filter 240 is an optical bandpass filter. The bandpass filter 240 is arranged to filter the received light 400b such that the received light 400b only is sensed within the wavelength interval. Hence, the bandpass filter 240 has a passband frequency interval equal to the wavelength interval specified above. Thus, according to an embodiment the bandpass filter 240 has a passband frequency interval comprising one of 759 nm, 823 nm, 899 nm, and 940 nm. As schematically illustrated in Fig. 2, the bandpass filter 240 lets through the received light 400b but reflects other light 400b, for example representing natural sunlight. This enables the use of a light sensor 220 that as such is sensitive to light also outside the wavelength interval specified above.

There could be different ways to place the electronic control system 200. As disclosed above, the electronic control system 200 can be arranged such that the light emitter 210 and the light sensor 220 are arranged to face a vehicle interior. Different placements of the electronic control system 200 have also been described above. Thus, the light emitter 210 and the light sensor 220 can be positioned at a dashboard of the vehicle 100, at the steering wheel of the vehicle 100, below or above the windshield of the vehicle 100, in a ceiling of the vehicle 100 or at an A-pillar of the vehicle 100.

According to an embodiment the electronic control system 200 further comprises an image generator 250. The image generator 250 is configured to generate an image of the vehicle occupant 300 from the light 400b sensed by the light sensor 220. The electronic control system 200 could further comprise a movement estimator 260. The movement estimator 260 is configured to estimate movement of the vehicle occupant 300 in the image.

The estimated movement of the vehicle occupant 300 could be used as input to a vehicle control system 270. The vehicle control system 270 can be configured to detect driver drowsiness and to perform actions, such as vehicle control, in response to having detected driver drowsiness. Hence according to an embodiment the electronic control system 200 further comprises a vehicle control system 270 configured to perform vehicle control based on the estimated movement.

There are different examples of vehicle control systems 270. For example, the vehicle control could relate to any of Adaptive Cruise Control (ACC) Automatic Emergency Braking (AEB) Autonomous Driving, AD, and warning indication provision to a user interface 280. Further description thereof is described below.

Additionally or alternatively, the vehicle control system 270 can by means of the movement estimator 260 be configured to obtain instructions as provided by the vehicle occupant 300 using a gesture-based user interface. In more detail, the movement estimator 260 can be configured to classify the movement of the vehicle occupant 300 into one gesture in a set of predefined gestures. Each such predefined gesture can correspond to a particular user input command and hence, upon having classified which of the gestures the vehicle occupant 300 has performed, the vehicle control system 270 can perform an action corresponding to the user input command of the thus classified gesture.

There are different examples of suitable light emitters 210. For example, the light emitter 210 could be composed of an array of semiconductor-based laser diodes, such as a vertical-cavity surface-emitting laser (VCSEL) array with a wavelength close to 759 nm, 823 nm, 899 nm, or 940 nm. VCSEL arrays have a strongly reduced temperature drift in comparison to standard infrared (IR) light emitting diodes (LEDs).

There are different examples of suitable light sensors 220. For example, the light sensor 220 could be configured to sense the light 400b using contrast detection. Hence the light sensor 220 does not need to be configured to sense different colours but only different shades of luminance. The light sensor 220 should sense incoming light at a wavelength close to 759 nm, 823 nm, 899 nm, or 940 nm. The light sensor 220 can have an image sensor pixel resolution of 752 by 480 pixels. The light sensor 220 can have a global shutter mechanism. Having a global shutter mechanism prevents smearing effects which otherwise could appear as a result of objects moving within the image being captured. The light sensor 220 can be an APTINA Wide-VGA, MT9V024 digital image sensor, with a global shutter mechanism). This light sensor has especially an enhanced near-infrared (NIR) performance.

Further, the light emitter 210 and the light sensor 220 can be synchronized. For example, the light sensor 220 can set its exposure time such that the light sensor 220 only senses receives light 400b during flashes when the light emitter 210 emits light 400a.

Reference is now made to Fig. 3 illustrating a method for monitoring a vehicle occupant 300 according to an embodiment.

S102: The light emitter 210 emits light 400a. The light 400a comprises a Fraunhofer line wavelength. The light is emitted inside a wavelength interval having a width of less than 50 nm, preferably less than 25 nm, even preferably less than 10 nm.

S106: The light sensor 220 receives light 400b. The received light 400b has been emitted by the light emitter 210 and is by the light sensor 220 received after having been reflected by the vehicle occupant 300.

S110: The light sensor 220 detects the received light 400b only within the wavelength interval.

At least steps S102 and steps S106 can be controlled by the electronic control system 200. Hence, the electronic control system 200 can be configured to cause the light emitter 210 to perform step S102 and the light sensor 220 to perform step S106.

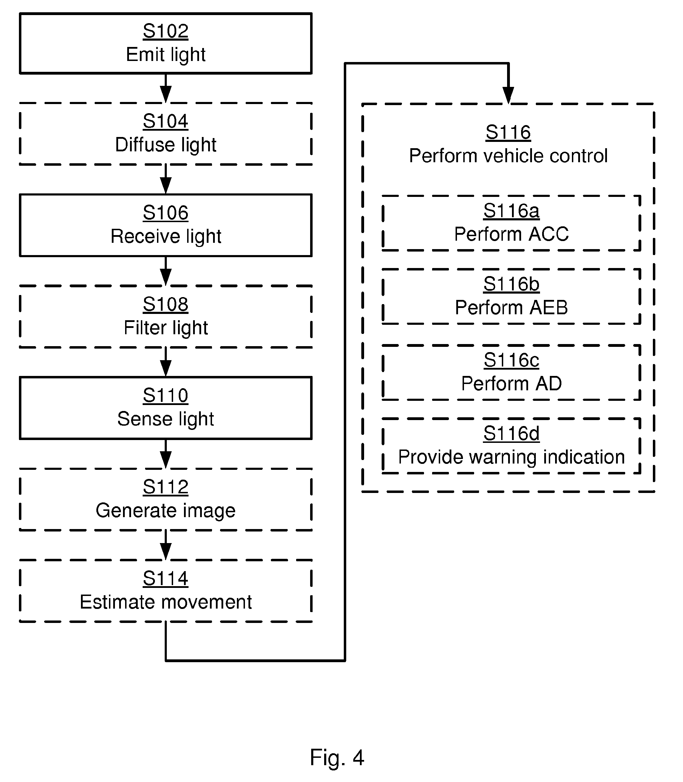

Reference is now made to Fig. 4 illustrating methods for monitoring a vehicle occupant 300 according to further embodiments. It is assumed that steps S102, S106, S110 are performed as disclosed above and a thus repeated description thereof is therefore omitted.

There may be different ways to manipulate the light 400a before it is reflected by the vehicle occupant 300. For example, as disclosed above, the electronic control system 200 can comprise a diffuser 230. Hence, according to an embodiment the method for monitoring the vehicle occupant 300 comprises step S104:
S104: The diffuser 230 diffuses the emitted light 400a before the emitted light 400a is reflected by the vehicle occupant 300. Step S104 can be controlled by the electronic control system 200. Hence, the electronic control system 200 can be configured to selectively determine whether to diffuse the emitted light 400a or not.

Further, as disclosed above, to an embodiment the electronic control system 200 further comprises a bandpass filter 240 to filter the received light 400b.

Hence, according to an embodiment the method for monitoring the vehicle occupant 300 comprises step S108:
S108: The bandpass filter 240 filters the received light 400b such that the received light 400b only is sensed within the wavelength interval.

There may be different ways to process the light 400b sensed by the light sensor 220. For example, as disclosed above, the electronic control system 200 can comprise an image generator 250 and a movement estimator 260. Hence, according to an embodiment the method for monitoring the vehicle occupant 300 comprises steps S112 and S114:
S112: The image generator 250 generates an image of the vehicle occupant 300 from the light 400b sensed by the light sensor 220. How to generate an image from input from a light sensor is as such known in the art and further description thereof is therefore omitted.
S114: The movement estimator 260 estimates movement of the vehicle occupant 300 in the thus generated image. How to estimate movement of an object in an image is as such known in the art and further description thereof is therefore omitted.

There are different operations that the electronic control system 200 can be configured to perform once having estimated the movement of the vehicle occupant 300 as in step S114. For example, as disclosed above, the estimated movement of the vehicle occupant 300 can be used as input to a vehicle control system 270. Hence, according to an embodiment the electronic control system 200 provides the estimated movement of the vehicle occupant 300 as input to the vehicle control system 270.

According to some embodiments the vehicle control system 270 is part of, or at least controlled by, the electronic control system 200. Hence, according to an embodiment the electronic control system 200 is configured to perform step S116:
S116: The electronic control system 200 performs vehicle control using the at least one vehicle control system 270 and based on the estimated movement of the vehicle occupant 300. The vehicle control can depend on the level of drowsiness of the vehicle occupant 300.

There are different examples of vehicle control systems 270. As disclosed above, the vehicle control system 270 could be an Adaptive Cruise Control (ACC) system, an Automatic Emergency Braking (AEB) system, or an Autonomous Driving (AD) system.

Hence, according to an embodiment the electronic control system 200 is configured to perform at least one of steps S116a, S116b, and S116c as part of step S116:
S116a: The electronic control system 200 performs Adaptive Cruise Control (ACC). The electronic control system 200 is thereby configured to adjust the speed of the automotive vehicle 100 depending, for example, on a level of drowsiness detected for the vehicle occupant 300.
S116b: The electronic control system 200 performs Automatic Emergency Braking (AEB). The electronic control system 200 is thereby configured to control a braking system of the automotive vehicle 100 to avoid collision which otherwise might be caused due to drowsiness of the vehicle occupant 300.
S116c: The electronic control system 200 performs Autonomous Driving (AD). The electronic control system 200 is thereby configured to control navigation of the automotive vehicle 100 without human input.

Any given step of steps S116a-S116c could be combined with at least one other step of steps S116a-S116c.

Additionally or alternatively, the electronic control system 200 is configured to provide warnings (such as sounds or visual alerts) to the vehicle driver of the automotive vehicle 100. Hence, according to an embodiment the electronic control system 200 is configured to perform step S116d as part of step S116:
S116d: The electronic control system 200 provides a warning indication to the user interface 280.
Step S116d could be combined with any of step S116a-S116c.

Additionally or alternatively, as disclosed above, the vehicle control system 270 can by means of the movement estimator 260 be configured to obtain instructions as provided by the vehicle occupant 300 using a gesture-based user interface.

There could be different examples of vehicle occupants 300. As disclosed above, the vehicle occupant 300 could be a vehicle driver or a vehicle passenger.

The herein disclosed electronic control system 200 could be part of the automotive vehicle 100. Hence, according to an embodiment the automotive vehicle 100 comprises an electronic control system 200 as herein disclosed.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. An electronic control system (200) for monitoring a vehicle occupant (300), the electronic control system (200) comprising:
a light emitter (210) arranged to emit light (400a) comprising a Fraunhofer line wavelength, wherein the light is emitted inside a wavelength interval having a width of less than 50 nm, preferably less than 25 nm, even preferably less than 10 nm; and
a light sensor (220) arranged to receive light (400b) having been emitted by the light emitter (210) after having been reflected by the vehicle occupant (300), and configured to sense said light (400b) only within said wavelength interval.

2. The electronic control system (200) according to claim 1, wherein the Fraunhofer line wavelength is one of 759 nm, 823 nm, 899 nm, and 940 nm.

3. The electronic control system (200) according to any of the preceding claims, further comprising:
a diffuser (230) arranged to diffuse said emitted light (400a) before being reflected by the vehicle occupant (300).

4. The electronic control system (200) according to any of the preceding claims, further comprising:
a bandpass filter (240) arranged to filter said received light (400b) such that said received light (400b) only is sensed within said wavelength interval.

5. The electronic control system (200) according to any of the preceding claims, wherein the light emitter (210) and the light sensor (220) are arranged to face a vehicle interior.

6. The electronic control system (200) according to according to any of the preceding claims, further comprising:
an image generator (250) configured to generate an image of the vehicle occupant (300) from the light (400b) sensed by the light sensor (220); and
a movement estimator (260) configured to estimate movement of the vehicle occupant (300) in said image.

7. The electronic control system (200) according to claim 6, further comprising:
a vehicle control system (270) configured to perform vehicle control based on the estimated movement.

8. The electronic control system (200) according to claim 7, wherein vehicle control comprises at least one of Adaptive Cruise Control, ACC, Automatic Emergency Braking, AEB, Autonomous Driving, AD, and warning indication provision to a user interface (280).

9. An automotive vehicle (100) comprising an electronic control system (200) according to according to any of the preceding claims.

10. A method for monitoring a vehicle occupant (300), the method comprising:
emitting (S102), by a light emitter (210), light comprising a Fraunhofer line wavelength, wherein the light is emitted inside a wavelength interval having a width of less than 50 nm, preferably less than 25 nm, even preferably less than 10 nm;
receiving (S106), by a light sensor (220), light (400b) having been emitted by the light emitter (210) after having been reflected by the vehicle occupant (300); and
sensing (S110), by said light sensor (220), said light (400b) only within said wavelength interval.

11. The method according to claim 10, further comprising:
diffusing (S104), by a diffuser (230), said emitted light (400a) before being reflected by the vehicle occupant (300).

12. The method according to claim 10, further comprising:
filtering (S108), by a bandpass filter (240), said received light (400b) such that said received light (400b) only is sensed within said wavelength interval.

13. The method according to claim 10 or 11, further comprising:
generating (S112), by an image generator (250), an image of the vehicle occupant (300) from the light (400b) sensed by the light sensor (220); and
estimating movement (S114), by a movement estimator (260), of the vehicle occupant (300) in said image.

14. The method according to claim 12, further comprising:
performing vehicle control (S116), by a vehicle control system (270), based on the estimated movement.

15. The method according to claim 14, wherein performing vehicle control comprises at least one of:
performing (S116a) Adaptive Cruise Control, ACC;
performing (S116b) Automatic Emergency Braking, AEB;
performing (S116c) Autonomous Driving, AD; and
providing (S116d) a warning indication to a user interface (280).
